# EUROPEAN PATENT APPLICATION

(11) **EP 1 617 312 A2**
(43) Date of publication of application: **18.01.2006**
(21) Application number: 04257445.9
(22) Date of filing: 30.11.2004
(51) Int. Cl.: G06F 1/00

(54) **Non-contact IC recording medium, recording medium managing program, and recording medium managing method**

(30) Priority: 08.07.2004 JP 2004201923
(71) Applicant: FUJITSU LIMITED, Kawasaki-shi, Kanagawa 211-8588 (JP); Fujitsu Frontech Limited, Inagi-shi, Tokyo 206-8555 (JP)
(72) Inventor: Yamamoto, Koken, Inagi-shi Tokyo 206-8555 (JP); Hashimoto, Shigeru, Inagi-shi Tokyo 206-8555 (JP); Sugimura, Yoshiyasu, Inagi-shi Tokyo 206-8555 (JP)
(74) Representative: Hitching, Peter Matthew

(57) **Abstract**

A non-contact IC recording medium (100) that operates in response to a radio instruction from a reader/writer (200) includes a write-protect area setting unit that sets a write-protect area where a writing of data is prohibited; an area determining unit that determines, when data for the writing is received, whether an area where the data is to be written is the write-protect area; and a write processing unit that writes, when the area determining unit determines that the area is not the write-protect area, writes the data in the area, and changes the area into the write-protect area.

## Description

### BACKGROUND OF THE INVENTION

### 1) Field of the Invention

The present invention relates to a non-contact IC recording medium that operates in response to a radio instruction from a reader/writer, and particularly to a non-contact IC recording medium, a recording medium managing program, and a recording medium managing method capable of improving security.

### 2) Description of the Related Art

In recent years, radio frequency identification (RFID) has been used in various fields such as distribution management system, user authentication system, electronic money system, and transportation system. For example, in the distribution management system, integrated circuit (IC) tags on which data is recorded are used instead of delivery tickets or tags to perform sorting of packages or inventory management, and in the user authentication system, IC cards on which personal information or the like is recorded are used to perform entrance management and the like.

However, since the data recorded in the IC tag or IC card is protected by a password, when the third party knows the password, there is a problem that the data recorded in the IC tag or IC card is illegally rewritten by the third party, which causes a problem on security.

In the technique disclosed in Japanese Patent Application Laid-Open Publication No. 2003-337928, a one-time password is set in an IC tag, necessary data is written in the IC tag, and then the one-time password is erased so that the data in the IC tag is prevented from being falsified.

In the technique disclosed in Japanese Patent Application Laid-Open Publication No. 2003-24785, an IC card holds two types of external interfaces such as non-contact external interface and contact external interface and the IC card is permitted to be written by data only when both the external interfaces are accessed, so that the data is prevented from being illegally updated.

However, there is a problem in the conventional techniques that a normal user cannot efficiently change the data in the IC tag and the IC card contrary to improved security.

For example, when an error is found in the data recorded in the IC tag after the one-time password set in the IC tag is erased, the erroneous data cannot be corrected and a new IC tag is required to prepare.

Even when the data is written in the IC card using the two types of external interfaces, the two types of predetermined interfaces have to be used for each IC card when the normal user writes data in the IC card so that a load on the user is large.

In other words, it is a remarkably important object to improve security of the IC tag or IC card while facilitating the normal user updating data in the IC tag or IC card.

### SUMMARY OF THE INVENTION

It is an object of the present invention to solve at least the above problems in the conventional technology.

A non-contact IC recording medium according to one aspect of the present invention, which operates in response to a radio instruction from a reader/writer, includes a write-protect area setting unit that sets a write-protect area where a writing of data is prohibited; an area determining unit that determines, when data for the writing is received, whether an area where the data is to be written is the write-protect area; and a write processing unit that writes, when the area determining unit determines that the area is not the write-protect area, writes the data in the area, and changes the area into the write-protect area.

A recording medium managing method for managing a non-contact IC recording medium according to another aspect of the present invention includes setting a write-protect area where a writing of data is prohibited; an area determining procedure that, when receiving write data, determines whether an area where the data is written is a write-protect area; and a write processing unit that writes, when the area determining unit determines that the area is not the write-protect area, writes the data in the area, and changes the area into the write-protect area.

A recording medium managing program for managing a non-contact IC recording medium according to still another aspect of the present invention realizes the recording medium managing method according to the above aspect on a computer.

A computer-readable recording medium according to still another aspect of the present invention stores a recording medium managing program for managing a non-contact IC recording medium according to the above aspect.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a block diagram of a system structure of an IC tag I system;
Fig. 2 is a block diagram of a structure of the IC tag shown in Fig. 1;
Fig. 3 is a diagram of one example of a data structure of a WOM setting area;
Fig. 4 is a diagram of one example of a data structure of a system area;
Fig. 5 is a diagram of one example of a data structure of a CONFIGURATION command;
Fig. 6 is a diagram of one example of a data structure of bitmap data;
Fig. 7 is a diagram of a specific example of a lock state bitmap and a WOM area bitmap;
Fig. 8 is a diagram of one example of a data structure of a READ STATUS command;
Fig. 9 is a diagram of output data for the READ STATUS command;
Fig. 10 is a diagram of one example of a bitmap of the output data;
Fig. 11 is a diagram of one example of a data structure of a WRITE command;
Fig. 12 is a diagram of one example of a data structure of KILL command enable flag data;
Fig. 13 is a diagram of one example of a data structure of a READ command;
Fig. 14 is a diagram of one example of a data structure of a GROUP SELECT command;
Fig. 15 is a diagram of one example of a data structure of a KILL command;
Fig. 16 is a flowchart for explaining a processing of the IC tag system according to the CONFIGURATION command;
Fig. 17 is a flowchart for explaining a processing of the IC tag system according to the WRITE command;
Fig. 18 is a flowchart for explaining a processing of the IC tag system according to the KILL command;
Fig. 19 is a diagram of the IC tag system using a handy terminal; and
Fig. 20 is a functional block diagram of a structure of an IC card according to the present invention.

### DETAILED DESCRIPTION

Exemplary embodiments of a non-contact IC recording medium, a recording medium managing program, and a recording medium managing method according to the present invention will be explained below in detail with reference to the accompanying drawings.

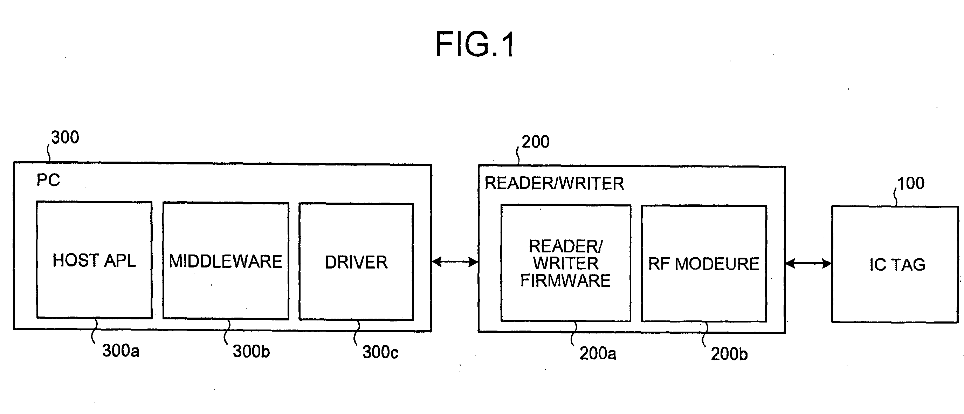

Fig. 1 is a block diagram of the system structure of the IC tag system according to the present embodiment. As shown, this IC tag system includes an IC tag 100, a reader/writer 200, and a personal computer (PC) 300. The IC tag 100 and the reader/writer 200 make wireless data communication with each other.

The reader/writer 200 and the PC 300 are interconnected through universal serial bus (USB) or local area network (LAN) to make data communication with each other.

The PC 300 generates an instruction for the IC tag 100 and the like and uses the reader/writer 200 to transmit the generated instruction and the like to the IC tag 100. The PC 300 uses the reader/writer 200 to receive data recorded in the IC tag 100. The PC 300 has a host application (APL) 300a, a middleware 300b, and a driver 300c.

The host APL 300a acquires information such as identification (ID) or password of the IC tag 100 from a server (not shown) or an input device, and passes the acquired ID and password, and an instruction for the IC tag 100 to the middleware 300b.

The middleware 300b exchanges data between the host APL 300a and the driver 300c.

The driver 300c performs interface control with respect to the reader/writer 200. Further, the driver 300c transmits the data passed from the host APL 300a to the reader/writer 200, and passes the data received from the reader/writer 200 to the host APL 300a via the middleware 300b.

The reader/writer 200 understands the instruction contained in the data received from the PC 300 and performs writing of data into the IC tag 100. Further, the reader/writer 200 reads out the data contained in the IC tag 100 and transmits the read data to the PC 300. The reader/writer 200 has a reader/writer firmware 200a and a RF module 200b.

The reader/writer firmware 200a is a processor that understands the interface control with the PC 300 or the instruction transmitted from the PC 300, and the RF module 200b is a processor that uses an antenna (not shown) to perform writing or reading of data for the IC tag 100.

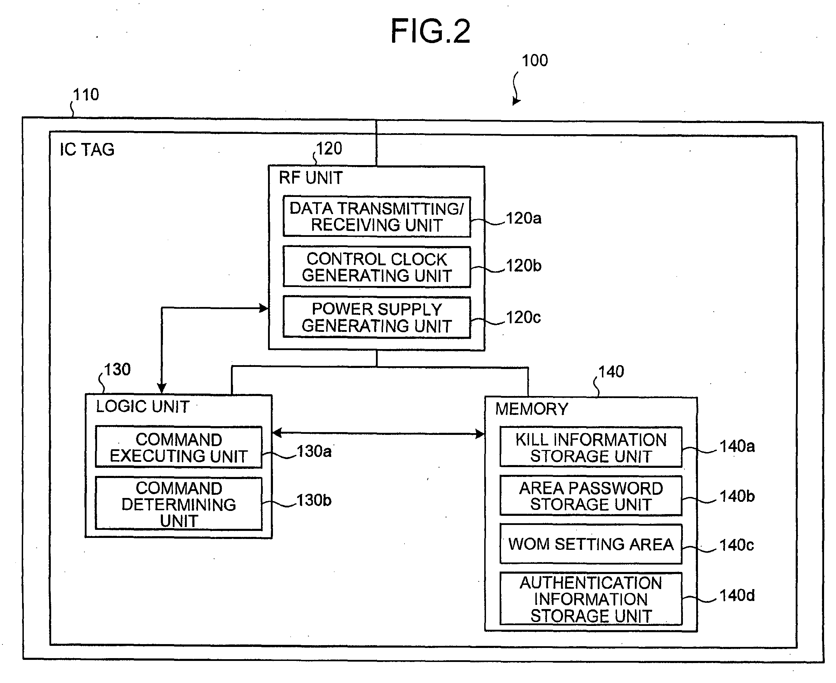

Fig. 2 is a functional block diagram of the structure of the IC tag 100 shown in Fig. 1. As shown, this IC tag 100 has an antenna 110, a RF unit 120, a logic unit 130, and a memory 140.

The RF unit 120 is a processor that uses the antenna 110 to make data communication with the reader/writer 200, and has a data transmitting/receiving unit 120a, a control clock generating unit 120b, and a power supply generating unit 120c.

The data transmitting/receiving unit 120a uses the antenna 100 to receive data from the reader/writer 200 and to pass the received data to the logic unit 130. The data transmitting/receiving unit 120a uses the antenna 110 to transmit the data received from the logic unit 130 to the reader/writer 200.

The control clock generating unit 120b generates a control clock and supplies the generated control clock to the logic unit 130.

The power supply generating unit 120c uses the antenna 110 to convert an electromagnetic field transmitted from the reader/writer 200 into power and to supply the converted power to the logic unit 130 and the memory 140.

The logic unit 130 is a processor that performs a predetermined processing on the memory 140 according to the instruction contained in the data passed from the RF unit 120. The logic unit 130 has a command executing unit 130a and a command determining unit 130b.

The command executing unit 130a performs a processing based on the instruction contained in the data passed from the RF unit 120. The instruction contained in the data passed from the RF unit 120 contains a CONFIGURATION command, a READ STATUS command, a WRITE command, a KILL command, a READ command, and a GROUP SELECT command.

A processing will be explained when the command executing unit 130a receives the CONFIGURATION command. This CONFIGURATION command is an instruction of changing a password to be used for permitting WOM (Write Once Memory) area setting and lock/unlock setting or the WOM area setting or the lock/unlock setting (hereinafter, "area setting password").

Here, the WOM area setting is directed for setting the WOM area where one-time data writing is permitted but the written data is inhibited to change or erase (data is permitted to add) and only reading is enabled. In an area set as the WOM area, it is possible to prevent the data written in the WOM area from being falsified until the setting of the WOM area is released, thereby improving security of the IC tag 100.

The lock/unlock setting is to set a specific area to either the lock state where data writing is not permitted or the unlock state where data writing is permitted. The command executing unit 130a writes data in an area in the unlock state and then changes the area from the unlock state into the lock state.

Since the WOM area setting and the lock/unlock setting are enabled by using the area setting password, the user who does not know the area setting password cannot perform the WOM area setting and the lock/unlock setting.

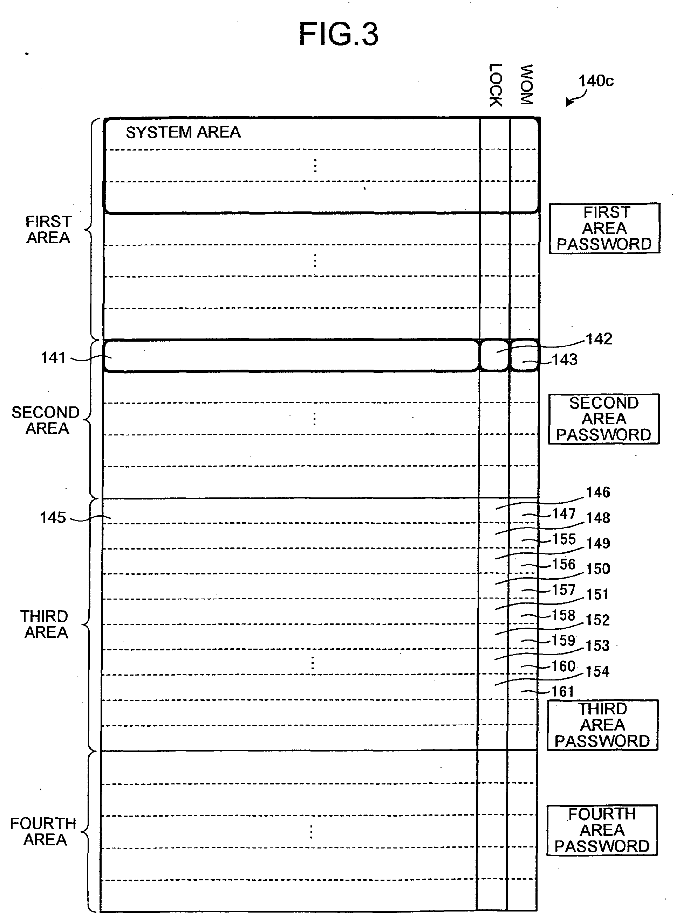

The WOM area setting and the lock/unlock setting are performed on a WOM setting area 140c contained in the memory 140. Fig. 3 is a diagram of one example of a data structure of the WOM setting area.

As shown in Fig. 3, this WOM setting area 140c contains four areas in total such as the first area, the second area, the third area, and the fourth area. Here, only four areas are depicted for convenience of the explanation, but any number of areas can be set.

An area setting password specific to each area is set for each area. In other words, a first area password is required for performing the WOM area setting and the lock/unlock setting on the first area, and a second area password is required for performing the WOM area setting and the lock/unlock setting on the second area.

Similarly, a third area password is required for performing the WOM area setting and the lock/unlock setting on the third area, and a fourth area password is required for performing the WOM area setting and the lock/unlock setting on the fourth area. The command determining unit 130b determines whether the area setting password is correct.

When the command determining unit 130b determines that the area password is not correct in the determination as to whether the area password is correct, a password mismatch flag corresponding to the area password is set in an area password storage unit 140b. This password mismatch flag is reset when the corresponding area password is successfully matched and a response to the CONFIGURATION command is returned.

While the password mismatch flag is being set, an interval of predetermined time is required until the collating of the area password is started after the CONFIGURATION command for the area is received.

The area password storage unit 140b holds the first area password, the second area password, the third area password, and the fourth area password.

In each area, a WOM area setting flag and a lock/unlock setting flag are present by predetermined bytes, and the WOM area setting flag and the lock/unlock setting flag are established so that the corresponding area enters the WOM area and the lock/unlock state.

For example, when an area 141 made of predetermined bytes is set to the WOM area and the lock state, a bit is established in a lock/unlock setting flag area 142 and a bit is established in a WOM area setting flag area 143. Other area can be set to the WOM area and the lock state by establishing bits in the corresponding WOM area setting flag and the lock/unlock setting flag area.

When a bit is not established in the lock/unlock setting flag area, it indicates that the corresponding area is in the unlock state, and when a bit is not established in the WOM area setting flag area, it indicates that the area is not the WOM area,

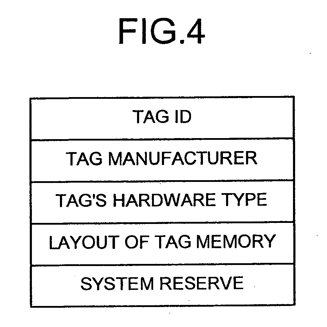

A system area is present in the first area of the WOM setting area 140c. Fig. 4 is a diagram of one example of a data structure of the system area. As shown, the system area contains information on tag ID, tag manufacturer, tag's hardware type, layout of tag memory, and system reserve.

An area corresponding to the system area is previously set to the WOM area and the lock state so that the setting cannot be changed. In other words, when the command executing unit 130a receives an instruction of releasing the WOM area and the lock state for the system area, an error is transmitted to the reader/writer 200.

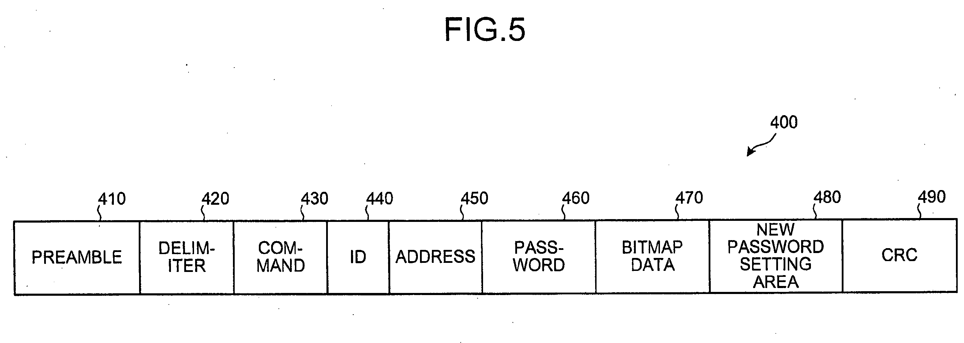

Fig. 5 is a diagram of one example of the data structure of the CONFIGURATION command. As shown, the CONFIGURATION command 400 includes a preamble 410, a delimiter 420, a command 430, an ID 440, an address 450, a password 460, bitmap data 470, a new password setting area 480, and a cyclic redundancy check (CRC) 490.

The preamble 410 and the delimiter 420 store therein information for notifying a start of data and a delimiter of data, respectively, and the CRC 490 stores therein data for examining whether an error is contained in the CONFIGURATION command 400. The command 430 contains data for identifying the CONFIGURATION command. In other words, the command executing unit 130a refers to the data stored in the command 430 to grasp that the instruction from the reader/writer 200 is the CONFIGURATION command.

The ID 440 stores therein data for identifying an IC tag to be executed by the CONFIGURATION command. The command determining unit 130b compares the data contained in the ID 440 with the ID of the IC tag 100 contained in the WOM setting area 140b of the memory 140 to notify the result to the command executing unit 130a.

In other words, when the data stored in the ID 440 is identical to the ID of the IC tag 100, the command executing unit 130a executes the CONFIGURATION command, and otherwise, it does not execute the CONFIGURATION command.

The address 450 stores information for designating a memory position where the data contained in the bitmap data 470 explained later is to be written.

The password 460 contains an area setting password. The area setting password is an area setting password different depending on a position where the WOM area setting and the lock/unlock setting are performed.

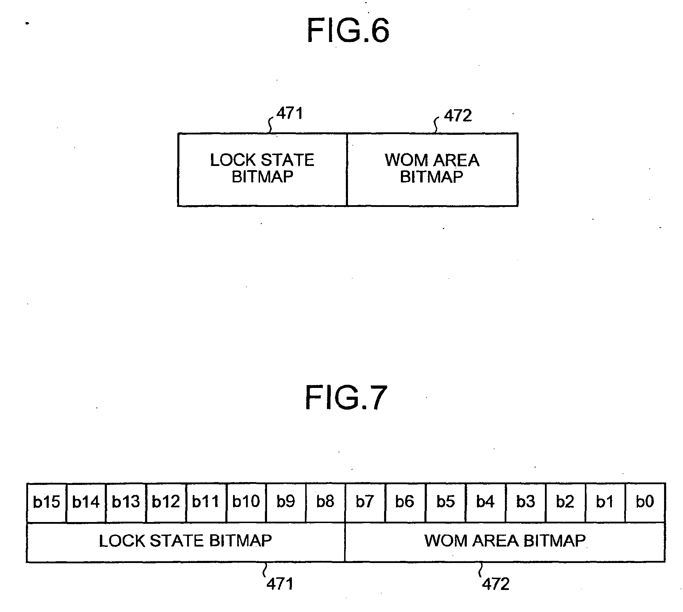

The bitmap data 470 stores therein a lock state bitmap 471 and a WOM area bitmap 472 as shown in Fig. 6.

The lock state bitmap 471 stores therein data on the lock/unlock setting from the position in the WOM setting area 140c specified by the address 450 to the predetermined area.

The WOM area bitmap 472 stores therein data on the WOM area setting from the position in the WOM setting area 140c specified by the address 450 to the predetermined area.

In other words, the command executing unit 130a establishes bits in the lock/unlock setting flag area and the WOM area setting flag area in the WOM setting area 140c based on the address 450, the lock state bitmap 471, and the WOM area bitmap 472.

Fig. 7 is a diagram of a specific example of the lock state bitmap 471 and the WOM area bitmap 472. As shown, the lock state bitmap 471 contains b4, b5, b6, and b7, and the WOM area bitmap 472 contains b0, b1, b2, and b3.

Information on whether to establish a flag in the lock/unlock setting flag area is contained in b4 to b7, and information on whether to establish a flag in the WOM area setting flag are is contained in b0 to b3. Specifically. b0 to b7 hold a value of "1" or "0", "1" is held, which means to establish a flag, and "0" is held, which means to establish no flag.

For example, as shown in Fig. 3, when an area specified by the address 450 is an area 145, a lock/unlock setting flag area 146 corresponds to b8 and the WOM area setting flag area 147 corresponds to b0. The lock/unlock setting flag areas 148 to 154 correspond to b9 to b15, respectively, and the WOM area setting flag areas 155 to 161 correspond to b1 to b7, respectively.

In other words, the command executing unit 130a simultaneously performs the WOM area setting and the lock/unlock setting for eight areas from the position in the WOM setting area 140c specified by the address 450.

When the area setting password is changed, the new password setting area 480 stores an area setting password changed.

When the area setting password is changed, the command executing unit 130a transmits the latest area setting password after changed to the reader/writer 200. This is because the area setting password cannot be changed by the area setting password before changed.

Though all the area setting passwords are changed by the CONFIGURATION command one time in the present embodiment, but the present invention is not limited thereto, and for example, all the area setting passwords may be changed by the CONFIGURATION command several times.

When a READ STATUS command is received, the command executing unit 130a notifies the status of the WOM area setting and the status of the lock/unlock setting for the designated area to the PC 300.

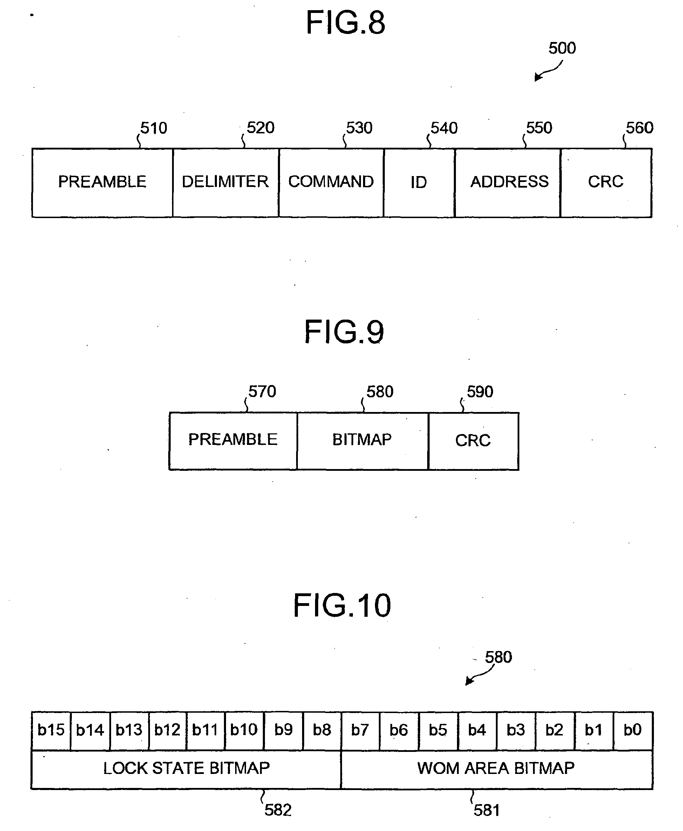

Fig. 8 is a diagram of one example of a data structure of the READ STATUS command. As shown, the READ STATUS command 500 includes a preamble 510, a delimiter 520, a command 530, an ID 540, an address 550, and a CRC 560.

The preamble 510, the delimiter 520, and the CRC 560 are identical to the preamble 410, the delimiter 420, and the CRC 480 shown in Fig. 5, respectively, and thus explanation thereof will be omitted. The command 530 stores therein data for identifying the READ STATUS command.

The ID 540 contains therein data for identifying the IC tag to be executed by the READ STATUS command. The command determining unit 130a compares the data contained in the ID 540 with the ID of the IC tag 100 contained in the WOM setting area 140c, and passes the comparison result to the command executing unit 130a.

When the data contained in the ID 540 is identical to the ID of the IC tag 100, the command executing unit 130a executes the READ STATUS command, and otherwise, it does not execute the READ STATUS command.

The address 550 contains therein information for specifying a position to be examined for the status of the WOM area setting and the status of the look/unlock setting in the WOM setting area 140c.

In other words, the command executing unit 130a which receives the READ STATUS command specifies an area in the WOM setting area 140c based on the information contained in the address 550, and notifies the status of the WOM area setting and the status of the lock/unlock setting for the specified area to the PC 300.

Fig. 9 depicts output data for the READ STATUS command created by the command executing unit 130a. As shown, this output data includes a preamble 570, a bitmap 580, and a CRC 590. The preamble 570 and the CRC 590 are similar to the preamble 410 and the CRC 480, respectively, and thus explanation thereof will be omitted.

The bitmap 580 stores therein information on the status of the WOM area setting and the status of the lock/unlock setting for the designated area. Fig. 10 is a diagram of one example of a bit map of the output data. As shown, the bitmap 580 includes a WOM area bitmap 581 and a lock state bitmap 582.

The WOM area bitmap 581 includes b0 to b7 indicating the status of the WOM area setting, and the lock state bitmap 582 includes b8 to b15 indicating the status of the lock setting.

For example, when an area designated by the address 550 is the area 145 in Fig. 3, the lock/unlock setting flag area 146 corresponds to b8, and the WOM area setting flag area 147 corresponds to b0. The lock/unlock setting flag areas 148 to 154 correspond to b9 to b15, respectively, and the WOM area setting flag areas 155 to 161 correspond to b1 to b7, respectively. When a bit is established in the corresponding flag area, b0 to b15 in the corresponding bitmap 580 hold "1", and when a bit is not established, they hold "0."

When a WRITE command is received, the command executing unit 130a writes data contained in the WRITE command into the WOM setting area 140c.

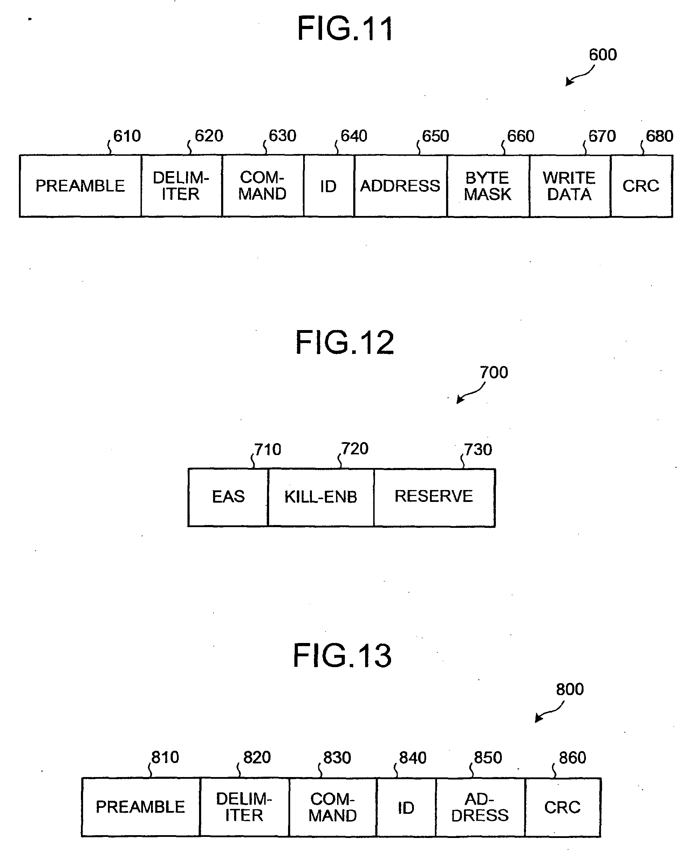

Fig. 11 is a diagram of one example of a data structure of the WRITE command. As shown, the WRITE command 600 includes a preamble 610, a delimiter 620, a command 630, an ID 640, an address 650, a byte mask 660, write data 670, and a CRC 680.

The preamble 610, the delimiter 620, the ID 640, and the CRC 680 are substantially similar to the preamble 410, the delimiter 420, the ID 440, and the CRC 480, respectively, and thus explanation thereof will be omitted.

The command 630 stores therein data for identifying the WRITE command. In other words, the command executing unit 130a refers to the data stored in the command 630 to grasp that the instruction from the reader/writer 200 is the WRITE command.

The address 650 contains therein information for specifying the position where the write data 670 is recorded. The command determining unit 130b determines whether the area specified by the address 650 is in the lock state or the unlock state, and when in the lock state, it transmits an error to the reader/writer 200 via the RF unit 120. In this case, the command executing unit 130a cancels the WRITE command.

The byte mask 660 stores therein data for specifying an enable range of the write data 670. In other words, the command executing unit 130a writes not all the data stored in the write data 670 into the WOM setting area 140c but only the data in the range specified by the byte mask 660 into the WOM setting area 140c. The write data 670 stores therein information on the IC tag 100.

The write data 670 may store therein KILL command enable flag data by the PC 300. This KILL command enable flag indicates whether to execute the KILL command explained later. In other words, when the command executing unit 130a receives the KILL command, if a bit is established in the KILL command enable flag, the unit 130a accepts the KILL command, and if a bit is not established in the KILL command enable flag, the unit 130a disables the KILL command.

Fig. 12 is a diagram of one example of a data structure of the KILL command enable flag data. As shown, the KILL command enable flag data 700 includes an EAS (Electronic Article Surveillance) 710, KILL-ENB (Enable) 720, and a reserve 730,. Here, the reserve 710 is a preliminary area.

The EAS 710 stores therein information on sales status of products attached with the IC tag 100. Specifically, when "1" is stored in the EAS 710, products attached with the IC tag 100 are sold. On the other hand, when "0" is stored in the EAS 710, products attached with the IC tag 100 are not sold.

The KILL-ENB 720 stores therein information on whether to accept the KILL command. Specifically, "1" is stored in the KILL-ENB 720, which indicates that the KILL command is accepted, and "0" is stored in the KILL-ENB 720, which indicates that the KILL command is not accepted.

This KILL command enable flag data 700 is recorded in the WOM setting area 140c based on the data stored in the address 650 similarly as in the general write data 670. The command determining unit 130b grasps the position where the KILL command enable flag data 700 is recorded, and when the KILL command is accepted, the unit 130b determines based on the KILL command enable flag data 700 whether to execute the KILL command.

When a READ command is received, the command executing unit 130a reads data on the area designated by the READ command from the WOM setting area 140c and transmits the read data to the reader/writer 200.

Fig. 13 is a diagram of one example of a data structure of the READ command. As shown, this READ command 800 includes a preamble 810, a delimiter 820, a command 830, an ID 840, an address 850, and a CRC 860. The preamble 810, the delimiter 820, the ID 840, and the CRC 860 are substantially similar to the preamble 410, the delimiter 420, the ID 440, and the CRC 480, respectively.

The command 830 stores therein data for identifying the READ command. In other words, the command executing unit 130a refers to the data stored in the command 830 to grasp that the instruction from the reader/writer 200 is the READ command.

The address 850 stores therein information for specifying the position where data is read. Therefore, the command executing unit 130a specifies the area where data is read in the WOM setting area 140c based on the data stored in the address 850 and reads the data in the specified area. Then the command executing unit 130a transmits the read data to the reader/writer 200 via the RF unit 120.

When a GROUP SELECT command is received, the command executing unit 130a compares the data in the area designated by the GROUP SELECT command with the data contained in the GROUP SELECT command. Only when both data are identical to each other, the command executing unit 130a transmits the tag ID to the reader/writer 200 via the RF unit 120.

On the other hand, when neither data is identical to each other, the command executing unit 130a does not return a response to the reader/writer 200 and terminates the processing.

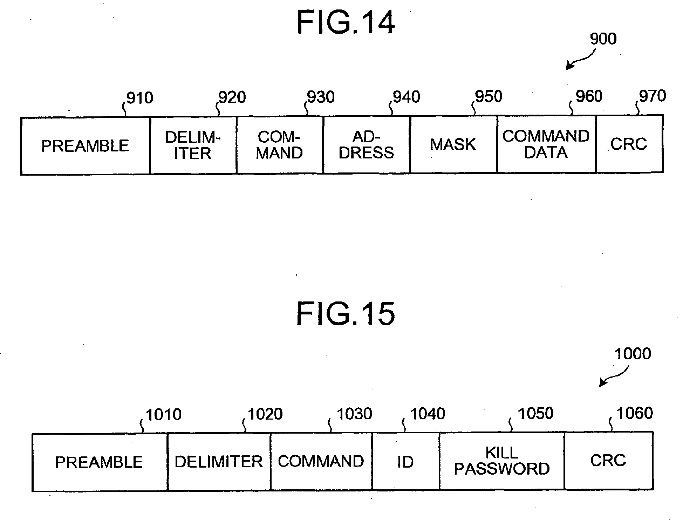

Fig. 14 is a diagram of one example of a data structure of the GROUP SELECT command. As shown, this GROUP SELECT command 900 includes a preamble 910, a delimiter 920, a command 930, an address 940, a mask 950, command data 960, and a CRC 970. The preamble 910, the delimiter 920, and the CRC 970 are substantially similar to the preamble 410, the delimiter 420, and the CRC 480, respectively, and thus explanation thereof will be omitted.

The command 930 stores therein data for identifying the GROUP SELECT command, In other words, the command executing unit 130a refers to the data stored in the command 930 to grasp that the instruction from the reader/writer 200 is the GROUP SELECT command.

The address 940 stores therein information for specifying a position to be compared by the command data 960 explained later, and the mask 950 stores therein information for specifying an enable range of the data contained in the command data 960.

The command data 960 stores therein data to be expected for the area specified by the address 940. In the present embodiment, especially this GROUP SELECT command is used for the EAS recorded in the WOM setting area 140c or for examining information on the KILL-ENB.

Therefore, the area where EAS and information on the KILL-ENB are recorded is designated by the address 940 to store the data to be expected in the command data so that the sales status of the IC tag 100 or the information on the KILL enable flag can be acquired.

For example, when the PC 300 stores data for specifying the position in the area where EAS and information on the KILL-ENB are recorded in the address 940, stores "01" in the command data 960, and transmits the same to the IC tag 100. if the ID is received from the IC tag 100, it is determined that the EAS is set to "0" and the KILL-ENB is set to "1."

In other words, it is determined that a product attached with the IC tag 100 is "unsold" and the KILL command enable flag is "enable." In this manner, the PC 300 can grasp the sales status of the IC tag 100 or the information on whether to accept the KILL command based on the data stored in the command data 960 or the response from the IC tag 100.

When a KILL command is received, if the command determining unit 130b determines that the KILL command enable flag is enable, the command executing unit 130a executes the KILL command to stop the function of the IC tag.

Specifically, when the command executing unit 130a executes the KILL command, a KILLSTATUS flag is established in the KILL information storage unit 140a. When power is supplied from the power supply generating unit 120, the command executing unit 730a confirms whether the KILLSTATUS flag is established in the KILL information storage unit 140a, and when the KILLSTATUS flag is established, the command executing unit 130a performs no processing and disables the function of the IC tag,

Fig. 15 is a diagram of one example of a data structure of the KILL command. As shown, this KILL command 1000 has a preamble 1010, a delimiter 1020, a command 1030, an ID 1040, a KILL password 1050, and a CRC 1060.

The preamble 1010, the delimiter 1020, the ID 1040, and the CRC 1060 are substantially similar to the preamble 410, the delimiter 420, the ID 440, and the CRC 480, respectively, and thus explanation thereof will be omitted.

The command 1030 stores therein data for identifying the KILL command, In other words, the command executing unit 130a refers to the data stored in the command 1030 to grasp that the instruction from the reader/writer 200 is the KILL command.

The KILL password 1050 stores therein a password for executing the KILL command. Thus, only when the password recorded in the KILL information storage unit 140a is identical to the password stored in the KILL password 1050 and the KILL command enable flag is enable, the command determining unit 130b permits the command executing unit 130a to execute the KILL command.

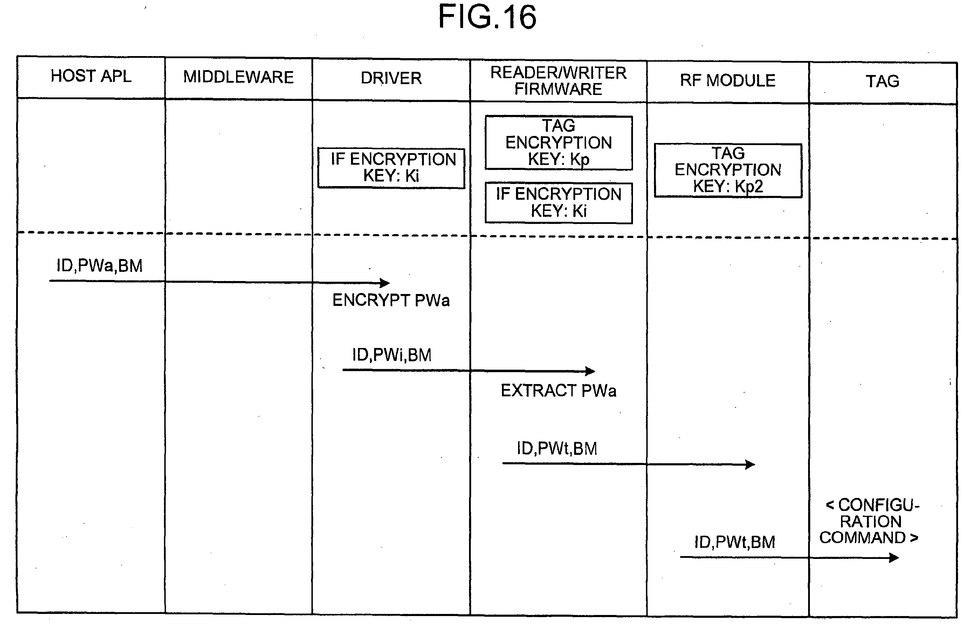

Fig. 16 is a flowchart for explaining the processing of the IC tag system according to the CONFIGURATION command. As shown, the host APL 300a passes the ID of the IC tag 100, PWa indicating the area password, and BM indicating the bitmap data (substantially similar to the bitmap data 470 shown in Fig. 5) to the driver 300c via the middleware 300b.

The driver 300c holds an interface (IF) encryption key Ki common to the reader/writer firmware 200a. The driver 300c creates PWi obtained by encrypting the PWa based on the encrypt and the PWa. The driver 300c transmits the ID, the PWi, and the BM to the reader/writer firmware 200a.

the reader/writer firmware 200a holds the IF encryption key Ki common to the driver 300c and a TAG encryption key Kp. The reader/writer firmware 200a extracts the PWa based on the decrypt and the IF encryption key Ki.

The reader/writer firmware 200a generates an area password PWt based on the PWa, the TAG encryption key Kp, and the encrypt. Thereafter, the reader/writer firmware 200a passes the ID, the PWt, and the BM to the RF module 200b.

The RF module 200b stores the ID received from the reader/writer firmware 200a in the ID 440 of the CONFIGURATION command 400, stores the PWt in the password 460, stores the BM in the bitmap data 470, and transmits the CONFIGURATION command 400 to the IC tag 100.

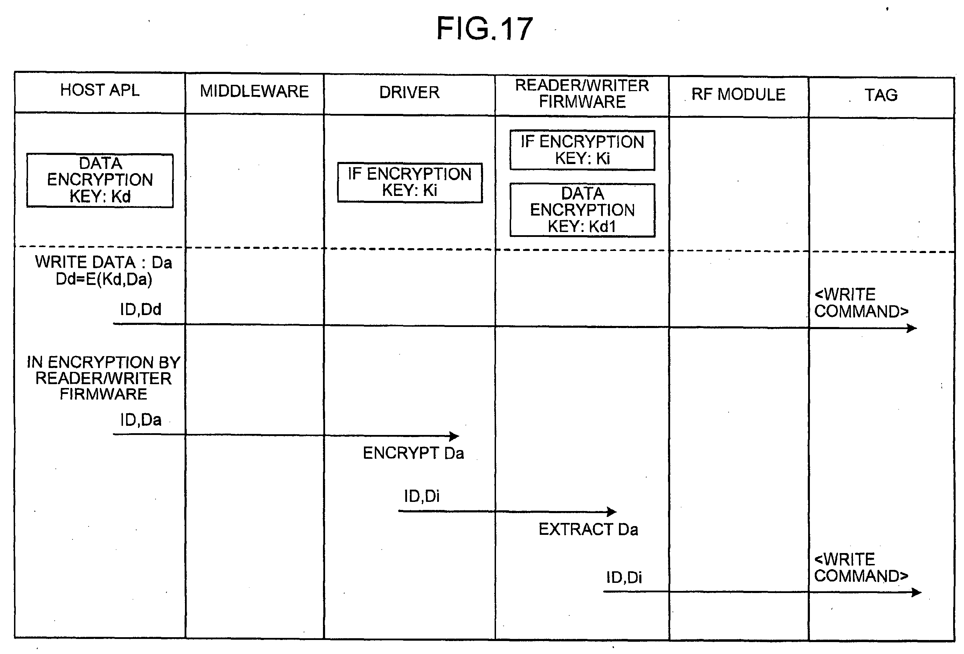

Fig. 17 is a flowchart for explaining the processing of the IC tag system according to the WRITE command. The processing of the IC tag system according to the WRITE command is divided into the case where write data Da is encrypted in the host APL 300a and the case where write data Da is encrypted in the reader/writer firmware 200a.

As shown in Fig. 17, the host APL 300a holds a data encryption key Kd. The host APL 300a encrypts the write data Da to create encrypted write data Di based on the write data Da, the encrypt E, and the data encryption key Kd.

The host APL 300a passes the encrypted write data Di and the ID to the RF module 200b via the middleware 300b, the driver 300c, and the reader/writer firmware 200a, and the RF module 200b stores the encrypted write data Di and the ID in the WRITE command 600 and transmits the WRITE command 600 to the IC tag 100.

As shown in Fig. 17, the host APL 300a passes the ID of the IC tag 100 and the write data Da to the driver 300c via the middleware 300b.

The driver 300c receives the ID and the write data Da from the host APL 300a. The driver 300c generates encrypted write data Di obtained by encrypting the write data Da based on the IF encryption key Ki, the encrypt, and the write data Da, and transmits the ID and the encrypted write data Di to the reader/writer firmware 200a.

The reader/writer firmware 200a receives the ID and the encrypted write data Di from the driver 300c. The reader/writer firmware 200a further holds a data encryption key Kd1.

The reader/writer firmware 200a extracts the write data Da based on the IF encryption key Ki, the encrypted write data Di, and the decrypt D,

Thereafter, the reader/writer firmware 200a generates encrypted write data Dt based on the data encryption key Kd1, the write data Da, and the encrypt, and passes the ID and the encrypted write data Dt to the RF module 200b.

The RF module 200b stores the ID and the encrypted write data Dt in the WRITE command 600, and transmits the WRITE command 600 to the IC tag 100.

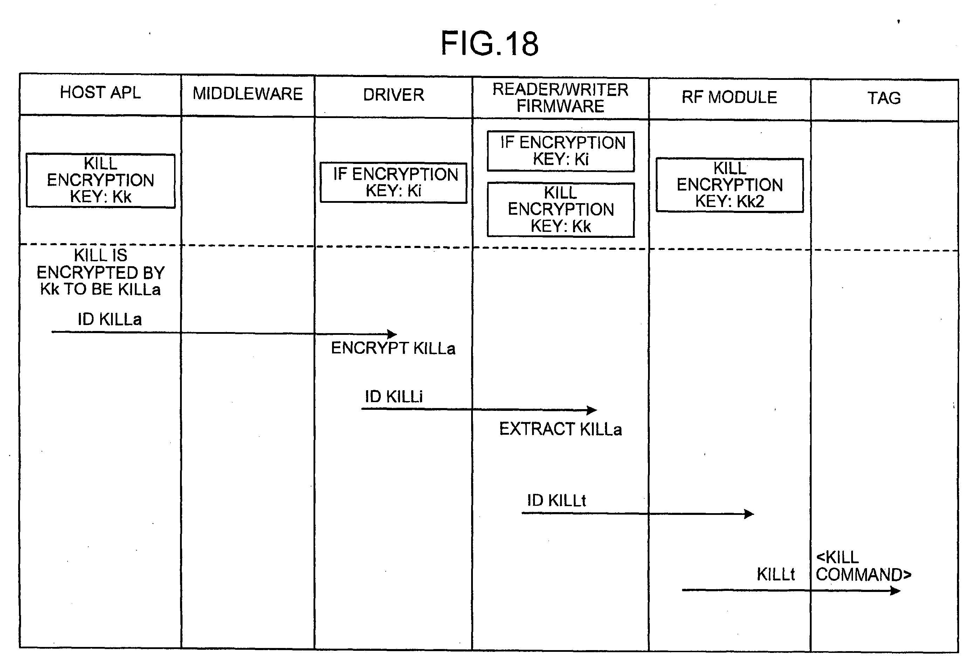

Fig. 18 is a flowchart for explaining the processing of the IC tag system according to the KILL command. As shown, the host APL 300a holds a KILL encryption key Kk, and encrypts KILL data by the KILL encryption key Kk to be KILLa. The host APL 300a passes the KILLa and the ID to the driver 300c via the middleware 300b.

The driver 300c encrypts the KILLa to generate KILLi based on the IF encryption key Ki, the KILLa, and the encrypt. The driver 300c transmits the ID and the KILLi to the reader/writer firmware 200a.

The reader/writer firmware 200a holds the KILL encryption key Kk. The reader/writer firmware 200a receives the ID and the KILLi from the driver 300c, and extracts the KILLa based on the IF encryption key Ki, the KILLi, and the decrypt.

The reader/writer firmware 200a encrypts the KILLa to generate KILLt based on the KILL encryption key Kk, the KILLa, and the encrypt.

The reader/writer firmware 200a passes the ID and the KILLt to the RF module 200b. The RF module 200b stores the KILLt in the KILL command 1000, and transmits the KILL command 1000 to the IC tag 100.

As explained above, in the present embodiment, the command executing unit 130a receives the CONFIGURATION command containing the information on the WOM area setting and the lock/unlock setting, and sets the area designated by the CONFIGURATION command to the WOM area and the lock/unlock state. The area set as the WOM area is disabled to change or delete written data after the data is written once so that the data can be prevented from being falsified by the third party who does not know the area setting password.

Since the command executing unit 130a automatically transit the area where the data is written to the lock state after the data is written in the area in the unlock state, the normal user can write data in the IC tag 100 even when he/she does not know the password, and a general user who does not know the area password cannot release the lock state after the data is written, thereby improving security of the IC tag 100.

Only part of managers, who perform the WOM area setting and the lock/unlock setting, use the password of the IC tag 100, and the normal user does not need to use the password of the IC tag 100, thereby preventing leakage of the password.

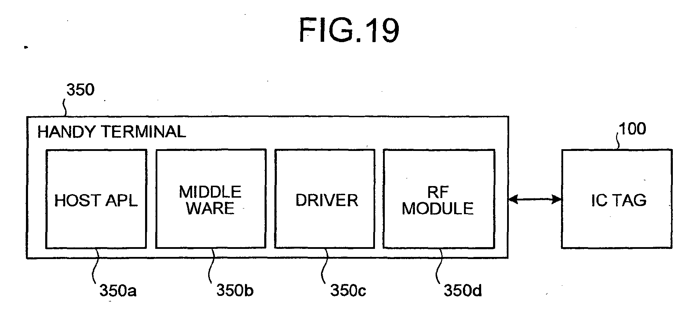

In the present embodiment, the PC and the reader/writer 200 are connected with each other via USB or LAN to perform writing or reading of data for the IC tag 100, but the present invention is not limited thereto and can use a handy terminal 350 as shown in Fig. 19 to perform writing or reading of data for the IC tag 100, for example.

The handy terminal 350 has a host APL 350a, a middleware 350b, a driver 350c, and a RF module 350d. The host APL 350a, the middleware 350b, the driver 350c, and the RF module 350d are substantially similar to the host APL 300a, the middleware 300b, the driver 300c, and the RF module 300d shown in Fig. 1, respectively, and thus detailed explanation thereof will be omitted.

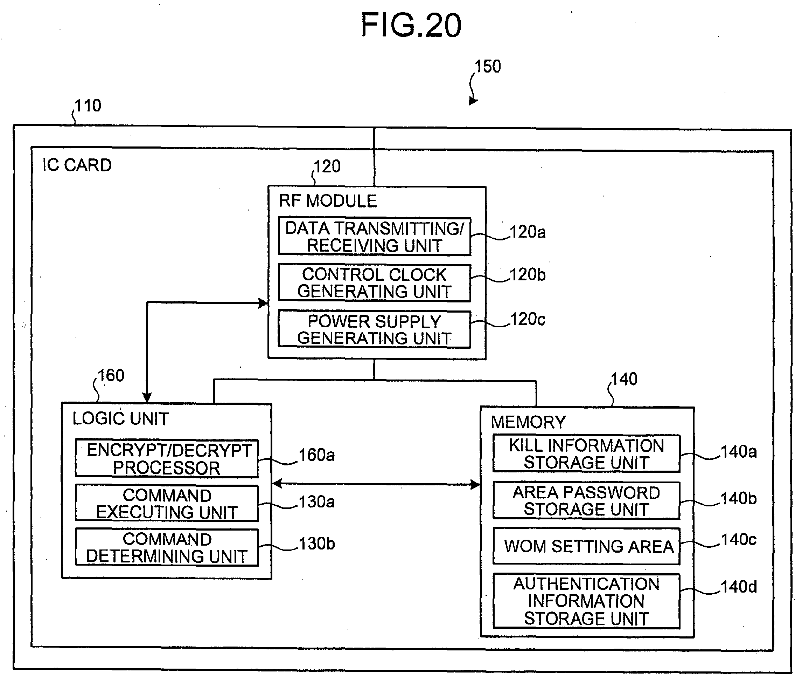

The present embodiment explains the case where the present invention is applied to the IC tag, but may be similarly applied to the IC card. Fig. 20 is a functional block diagram of a structure of the IC card according to the present invention.

As shown, the IC card 150 has a controller 160. Since other structure and operation are substantially similar to those of the IC tag 100 shown in Fig. 2, like numerals are denoted to like constituents, and thus explanation thereof will be omitted.

The controller 160 has an encrypt/decrypt processor 160a, a command executing unit 160b, and a command determining unit 160c.

The command executing unit 160b and the command determining unit 160c perform processings substantially similar to those of the command executing unit 130a and the command determining unit 130b shown in Fig. 2, and thus explanation thereof will be omitted.

The encrypt/decrypt processor 160a can make data communication between the reader/writer and the IC card 150 in an encrypted manner. Specifically, an encrypted command transmitted from the reader/writer is decrypted, and the decrypted command is passed to the command executing unit 160b.

The encrypt/decrypt processor 160a receives response data to the command created by the command executing unit 160b and encrypts the received response data. Then the encrypt/decrypt processor 160a transmits the encrypted response data to the reader/writer.

In other words, the IC tag cannot perform complicated processings such as encrypting and decrypting so that data exchanged between the reader/writer and the IC tag is in danger of being tapped, but the encrypt/decrypt processor 160a is used to encrypt data, thereby preventing the data from being tapped and improving security.

According to the present invention, when a write-protect area where data writing is inhibited is set and write data is received, it is determined whether an area where the data is to be written is the write-protect area, and when the area is determined not to be the write-protect area, the data is written in the area and the written area is changed to the write-protect area, so that the data can be prevented from being illegally falsified by the third party and a normal user can efficiently write data in the non-contact IC recording medium.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A non-contact IC recording medium that operates in response to a radio instruction from a reader/writer, the non-contact IC recording medium comprising:
a write-protect area setting unit that sets a write-protect area where a writing of data is prohibited;
an area determining unit that determines, when data for the writing is received, whether an area where the data is to be written is the write-protect area; and
a write processing unit that writes, when the area determining unit determines that the area is not the write-protect area, writes the data in the area, and changes the area into the write-protect area.

2. The non-contact IC recording medium according to claim 1, further comprising a change-prohibiting-area setting unit that permits one-time of data writing, and sets a change-prohibiting area indicating an area where the data written is prohibited from erasing and changing.

3. The non-contact IC recording medium according to claim 1, further comprising an prohibited-area changing unit that changes the write-protect area into a normal area where the data writing is enabled.

4. The non-contact IC recording medium according to claim 3, wherein when an instruction of changing the write-protect area into the normal area is received, the prohibited-area changing unit compares a password contained in the instruction with an area password corresponding to the write-protect area, and when both passwords are identical, changes the write-protect area into the normal area.

5. The non-contact IC recording medium according to claim 2, further comprising an area changing unit that changes the change-prohibiting area into a normal area where the data can be changed and erased.

6. The non-contact IC recording medium according to claim 5, wherein when an instruction of changing the write-protect area into the normal area is received, the area changing unit compares a password contained in the instruction with an area password corresponding to the write-protect area, and when both passwords are identical, changes the change-prohibiting area into the normal area.

7. The non-contact IC recording medium according to claim 4, further comprising a password changing unit that changes the area password.

8. The non-contact IC recording medium according to claim 6, further comprising a password changing unit that changes the area password.

9. A recording medium managing method for managing a non-contact IC recording medium that operates in response to a radio instruction from a reader/writer, the recording medium managing method comprising:
setting a write-protect area where a writing of data is prohibited;
an area determining procedure that, when receiving write data, determines whether an area where the data is written is a write-protect area; and
a write processing unit that writes, when the area determining unit determines that the area is not the write-protect area, writes the data in the area, and changes the area into the write-protect area.

10. The recording medium managing method according to claim 9, further comprising:
permitting one-time of data writing; and
setting a change-prohibiting area indicating an area where the data written is prohibited from erasing and changing.

11. The recording medium managing method according to claim 9, further comprising changing the write-protect area into a normal area where the data writing is enabled,

12. A recording medium managing program for managing a non-contact IC recording medium that operates in response to a radio instruction from a reader/writer, the recording medium managing program making a computer execute:
setting a write-protect area where a writing of data is prohibited;
an area determining procedure that, when receiving write data, determines whether an area where the data is written is a write-protect area; and
a write processing unit that writes, when the area determining unit determines that the area is not the write-protect area, writes the data in the area, and changes the area into the write-protect area.

13. The recording medium managing program according to claim 12, further making the computer execute:
permitting one-time of data writing; and
setting a change-prohibiting area indicating an area where the data written is prohibited from erasing and changing.

14. The recording medium managing program according to claim 12, further making the computer execute changing the write-protect area into a normal area where the data writing is enabled.

15. A computer-readable recording medium that stores a recording medium managing program for managing a non-contact IC recording medium that operates in response to a radio instruction from a reader/writer, wherein the recording medium managing program makes a computer execute:
setting a write-protect area where a writing of data is prohibited;
an area determining procedure that, when receiving write data, determines whether an area where the data is written is a write-protect area; and
a write processing unit that writes, when the area determining unit determines that the area is not the write-protect area, writes the data in the area, and changes the area into the write-protect area.
